# EUROPÄISCHE PATENTSCHRIFT

(11) **EP 1 984 285 B1**
(45) Veröffentlichungstag und Bekanntmachung des Hinweises auf die Patenterteilung: **11.05.2011**
(21) Anmeldenummer: 07702772.0
(22) Anmeldetag: 16.01.2007
(51) Int. Cl.: B65G 47/71

(54) **VORRICHTUNG ZUM AUSEINANDERFÜHREN VON GEGENSTÄNDEN**
APPARATUS FOR SEPARATING ARTICLES
DISPOSITIF POUR SORTIR DES OBJETS LES UNS DES AUTRES

(30) Priorität: 15.02.2006 DE 202006002351 U
(43) Veröffentlichungstag der Anmeldung: 29.10.2008
(73) Patentinhaber: KRONES Aktiengesellschaft, 93073 Neutraubling (DE)
(72) Erfinder: DIRMEIER, Emil, 93107 Thalmassing (DE); FLEISCHMANN, Bernd, 93049 Regensburg (DE); REIL, Johann, 93192 Wald (DE); SEGER, Martin, 92318 Neumarkt (DE)
(74) Vertreter: Grünecker, Kinkeldey, Stockmair & Schwanhäusser Anwaltssozietät
(86) Internationale Anmeldenummer: PCT/EP2007/000306
(87) Internationale Veröffentlichungsnummer: WO 2007/093253

(56) Entgegenhaltungen:
- DE-A1- 3 122 733
- DE-A1- 3 923 549
- FR-A- 2 804 419

## Beschreibung

Die Erfindung betrifft eine Vorrichtung zum Auseinanderführen von Gefäßen gemäß dem Oberbegriff des Anspruchs 1.

Es ist bereits eine derartige Vorrichtung bekannt, bei welcher der von zwei Riemen gebildete Förderkanal die Form einer Schlange aufweist, die sich als Ganzes in Transportrichtung bewegt (EP 873 951 B1). Bei dieser bekannten Vorrichtung werden die Gefäße während des Einlaufens in die Transferstation seitlich versetzt, passieren dann die Transferstation unverändert und werden schließlich versetzt auf den Abförderer übergeben. Der Einsatzbereich dieser bekannten Vorrichtung ist im Wesentlichen auf Gefäße mit zylindrischer Grundform beschränkt. Außerdem sind die Herstellungskosten auf Grund der mit speziellen, unterschiedlich geformten Nocken besetzten Riemen hoch.

Bei einer anderen bekannten Vorrichtung zum Auseinanderführen von Gefäßen werden diese durch einen einspurigen Zuförderer zwischen die sich trichterförmig erweiternden Führungsgeländer eines mehrspurigen Abförderers geschoben (DE 101 32 531 A1). Zur Erhöhung des Staudrucks sind ausschließlich im Bereich des Zuförderers zwei gegenläufige Riemen angeordnet, die mit variabler Geschwindigkeit antreibbar sind. Auch diese bekannte Vorrichtung ist im Wesentlichen auf zylindrische Gegenstände beschränkt und konstruktiv sehr aufwändig.

Aus der Druckshrift DE 3 923 549 A1 ist eine Vorrichtung zum Auseinanderführer von Gegenständen, insbesondere Flaschen, bekannt.

Der Erfindung liegt die Aufgabe zugrunde, eine Vorrichtung zum Auseinanderführen eines einreihigen Stroms aufrechtstehender Gefäße mit einem großen Einsatzbereich und geringen Herstellungskosten zu schaffen.

Diese Aufgabe wird durch die im Anspruch 1 angegebenen Merkmale gelöst.

Vorteilhafte Weiterbildungen der Erfindung sind in den Unteransprüchen angegeben.

Im Nachstehenden wird ein Ausführungsbeispiel der Erfindung anhand der Zeichnungen beschrieben. Es zeigen:
- Fig. 1: die Draufsicht auf eine Vorrichtung zum Auseinanderführen von Gefäßen,
- Fig. 2: den Schnitt A B nach Fig. 1,
- Fig. 3: den Schnitt C D nach Fig. 1.

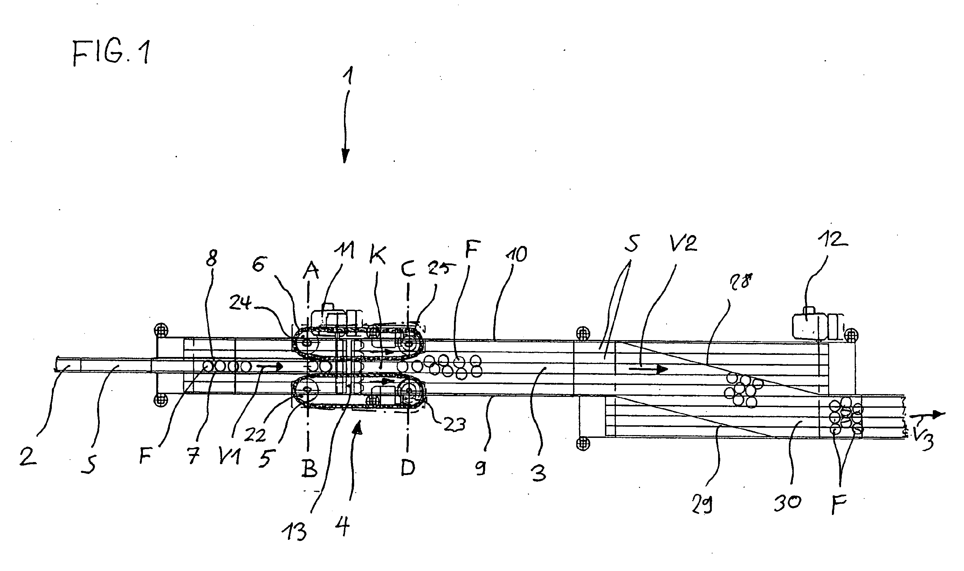

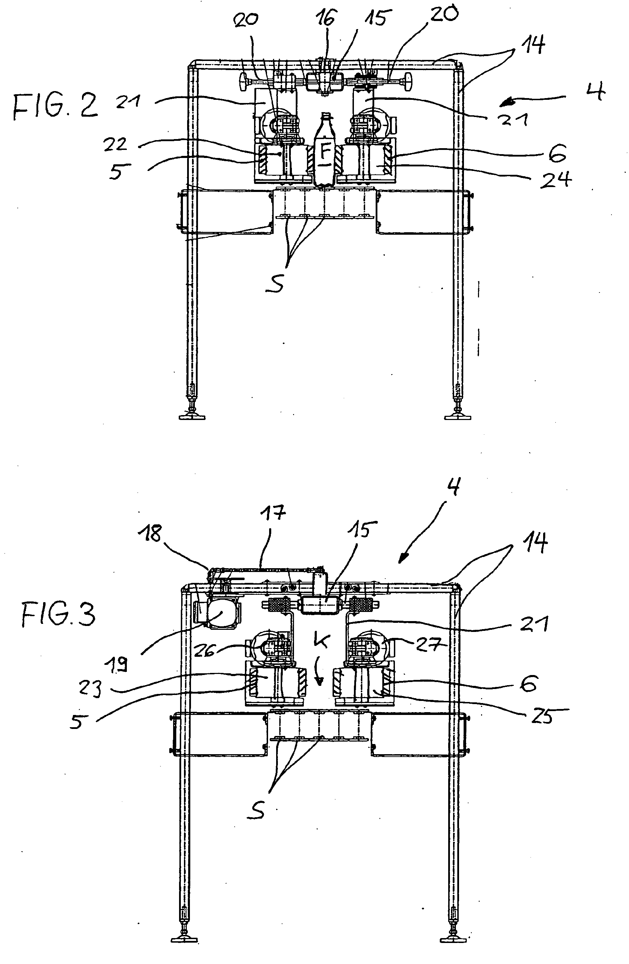

Die Vorrichtung 1 nach Fig. 1 bis 3 ist zum Auseinanderführen eines einreihig zugeführten Stroms aufrecht stehender Gefäße in Form von Flaschen F eingerichtet. Sie weist einen einspurigen Zuförderer 2 mit seitlichen Führungsgeländern 7, 8 und einen sich daran fluchtend anschließenden mehrspurigen Abförderer 3 mit zwei seitlichen Führungsgeländern 9, 10 auf. Zu- und Abförderer 2, 3 besitzen endlose Scharnierbandketten S, die eine durchgehend horizontale Förderfläche bilden. Diese ist glatt und eben und wird durch nicht gezeigte Düsen mit einem Schmiermittel versehen, um ein reibungsarmes Gleiten und Verdrängeln der Flaschen F zu ermöglichen.

Die Scharnierbandkette S des Zuförderers 2 wird durch einen Antriebsmotor 11 mit der Geschwindigkeit V1 angetrieben, während die Scharnierbandketten S des Abförderers 3 durch einen Antriebsmotor 12 mit der kleineren Geschwindigkeit V2 angetrieben werden. Im Übergangsbereich zwischen Zuförderer 2 und Abförderer 3 ist die zwischen den Scharnierbandketten S vorhandene Lücke durch ein horizontales Überschubblech 13 abgedeckt.

Im Übergangsbereich zwischen Zuförderer 2 und Abförderer 3 ist ferner eine Transferstation 4 vorgesehen, die beide Förderer überdeckt. Die Transferstation 4 weist ein aus mehreren senkrechten Säulen und horizontalen Streben gebildetes Gestell 14 auf. An der Unterseite der horizontalen Streben ist ein linearer, horizontaler Profilträger 15 angeordnet, der an dem zum Zuförderer 2 weisenden Ende mittels eines Lagerbolzens 16 um eine senkrechte Achse, die mittig zum Zuförderer 2 liegt, schwenkbar gelagert ist. An dem zum Abförderer 3 weisenden Ende des Profilträgers 15 ist eine Schubstange 17 angelenkt, deren anderes Ende an einer Kurbel 18 gelenkig befestigt ist. Die Kurbel 18 kann bei Bedarf durch einen am Gestell 14 befestigten Antriebsmotor 19 kontinuierlich angetrieben werden, wodurch sich eine pendelnde Bewegung des Profilträgers 15 um eine parallel zur Transportrichtung liegende Mittelposition mit in etwa sinusförmigem Geschwindigkeitsverlauf ergibt.

An beiden Seiten des Profilträgers 15 sind mittels jeweils zweier Gewindespindeln 20 jeweils zwei Haltebügel 21 verstellbar angeordnet, auf denen Umlenkrollen 22 bis 25 mit senkrechter Drehachse gelagert sind. Über die Umlenkrollen sind endlose Förderriemen 5, 6 mit elastischer Oberfläche geführt, die einen sich an den Zuförderer 2 anschließenden einspurigen Förderkanal K für die Flaschen F bilden. Mittels der Gewindespindeln 20 können die Haltebügel 21 mit den Förderriemen 5, 6 symmetrisch zur Mitte des Zuförderers 2 eingestellt und damit an verschiedene Flaschendurchmesser angepasst werden. Die Einstellung ist derart, dass die Förderriemen 5, 6 mit leichtem Druck an den Flaschen F anliegen und diese so reibschlüssig mitnehmen. Die Förderriemen 5, 6 können beispielsweise als Zahnriemen oder Keilriemen mit elastischem Belag ausgebildet sein.

Für jeden Förderriemen 5, 6 ist ein eigener Antriebsmotor 26, 27 vorgesehen, der auf einem Haltebügel 21 befestigt ist und auf eine Umlenkrolle 23, 25 einwirkt. Durch die Antriebsmotoren 26, 27 werden die beiden Förderriemen 5, 6 gegenläufig mit einer der Geschwindigkeit V1 gleichenden Umfangsgeschwindigkeit synchron angetrieben. Die Transportgeschwindigkeit im Förderkanal K stimmt somit mit der Transportgeschwindigkeit V1 des Zuförderers 2 überein.

Die vorzugsweise dicht an dicht oder mit geringen Abständen durch den Zuförderer 2 zugeführten und in die Transferstation 4 eingeführten Flaschen F passieren somit den Förderkanal K ohne Änderung ihrer Transportgeschwindigkeit und ihres gegenseitigen Abstands auf Grund der geradlinigen Ausbildung des Förderkanals K. Hierfür sind lediglich Riemen mit gleich dickem Belag erforderlich und es können Flaschen F jeglicher Form transportiert werden.

Während die Flaschen F den Förderkanal K passieren, werden sie über das Überschubblech 13 hinweg auf den langsamer laufenden Abförderer 3 überführt, behalten jedoch ihre Geschwindigkeit V1 noch so lange bei, wie sie von den Förderriemen 5, 6 erfasst sind. Danach gleiten die Flaschen F noch eine gewisse Strecke über die glatte, ebene und geschmierte Oberfläche der Scharnierbandketten S des Abförderers 3, bis sie durch die Reibung auf dessen Geschwindigkeit V2 abgebremst sind. Dabei ergibt sich zwangsläufig ein seitliches Verdrängeln bzw. Auseinanderführen der Flaschen F auf Grund der geringeren Transportgeschwindigkeit V2. Diese definiert somit das Maß der Auseinanderführung der Flaschen bzw. die Anzahl der Spuren auf dem Abförderer 3 und ist abhängig von der Standfestigkeit der Flaschen F.

Vom Abförderer 3 werden die Flaschen F mittels schräg zur Transportrichtung verlaufenden weiteren Führungsgeländern 28, 29 auf einen sich seitlich an den Abförderer anschließenden Sammelförderer 30 überführt, der mit einer nochmals langsameren Transportgeschwindigkeit V3 angetrieben wird. Dort bildet sich ein dichter, mehrspuriger Flaschenstrom.

Die vorbeschriebene Funktion der Vorrichtung 1 ermöglicht bis zu einer Leistung von ca. 80.000 Fl/h ein problemloses Auseinanderführen von im Wesentlichen rotationssymmetrischen Flaschen F. Bei der Verarbeitung von Flaschen mit polygonalem Querschnitt kann es zweckmäßig sein, dem Führungskanal K eine leicht hin- und herpendelnde Bewegung aufzuerlegen, was durch Einschalten des Motors 19 erfolgt. Auf diese Weise wird erreicht, dass die Flaschen F bei Verlassen des Förderkanals K bereits leicht versetzt sind, wodurch das anschließende Abbremsen und seitliche Verdrängen auf dem langsamer laufenden Abförderer 3 erleichtert wird.

## Patentansprüche

1. Vorrichtung (1) zum Auseinanderführen eines einreihigen Stroms aufrecht stehender Gefäße (F), mit einem einspurigen Zuförderer (2), einem mehrspurigen Abförderer (3) und einer Transferstation (4), die zwei gegenläufige Riemen (5, 6) oder dgl. umfasst, die einen geradlinig verlaufenden Förderkanal (K) für die Gefäße bilden, der die Gefäße (F) mit Geschwindigkeitsüberschuss auf dem mit einer kleineren Transportgeschwindigkeit als der Zuförderer (2) antreibbaren Abförderer (3) freigibt,
**dadurch gekennzeichnet, dass** die zwei gegenläufigen Riemen (5, 6) im wesentlichen mit der gleichen Transportgeschwindigkeit wie der Zuförderer antreibbar sind und dass der Förderkanal (K) stationär angeordnet ist.

2. Vorrichtung nach Anspruch 1, **dadurch gekennzeichnet, dass** die Transferstation (4) einen über dem Transportweg angeordneten Längsträger (15) aufweist, an dem Umlenkrollen (22 bis 25) für die Riemen (5, 6) drehbar gelagert sind.

3. Vorrichtung nach Anspruch2, **dadurch gekennzeichnet, dass** die Umlenkrollen (22 bis 25) quer zur Längsrichtung des Längsträgers (15) verstellbar sind.

4. Vorrichtung nach Anspruch 2 oder 3, **dadurch gekennzeichnet, dass** am Längsträger (15) mindestens ein Antriebsmotor (26, 27) für die Riemen (5, 6) angeordnet ist.

## Claims

1. Device (1) for separating a single-row stream of upright containers (F), with a single-row incoming conveyor (2), a multi-row outgoing conveyor (3) and a transfer station (4), which comprises two contradirectional belts (5, 6) or the like which form a straight conveyor channel (K) for the containers, which channel releases the containers (F) at excess speed on the outgoing conveyor (3) which can be driven at a lower transport speed than the incoming conveyor (2),
**characterised in that** the two contradirectional belts (5, 6) can substantially be driven at the same transport speed as the incoming conveyor and that the conveyor channel (K) is arranged stationary.

2. Device according to claim 1, **characterised in that** the transfer station (4) has a longitudinal support (15) arranged above the transport path on which diverter rolls (22 to 25) for the belts (5, 6) are mounted in a rotatable manner.

3. Device according to claim 2, **characterised in that** the diverter rolls (22 to 25) are adjustable at right angles to the longitudinal direction of the longitudinal support (15).

4. Device according to claim 2 or 3, **characterised in that** at least one drive motor (26, 27) for the belts (5, 6) is arranged at the longitudinal support (15).

## Revendications

1. Dispositif (1) pour séparer un flux à simple rangée de récipients placés debout (F), avec un dispositif d'amenée (2) à une voie, un dispositif d'évacuation (3) à plusieurs voies et une station de transfert (4) qui comprend deux courroies en sens inverse (5, 6) ou éléments similaires, qui forment un conduit de transport rectiligne (K) pour les récipients, lequel conduit de transport libère les récipients (F), avec un excédent de vitesse, sur le dispositif d'évacuation (3) apte à être entraîné à une vitesse de transport inférieure à celle du dispositif d'amenée (2),
**caractérisé en ce que** les deux courroies en sens inverse (5, 6) sont aptes à être entraînées à peu pries à la même vitesse de transport que le dispositif d'amenée, et **en ce que** le conduit de transport (K) est stationnaire.

2. Dispositif selon la revendication 1, **caractérisé en ce que** la station de transfert (4) comporte un longeron (15) qui est disposé au-dessus de la trajectoire de transport et sur lequel des poulies de renvoi (22 à 25) pour les courroies (5, 6) sont montées en de sente qu'elles puissent tourner.

3. Dispositif selon la revendication 2, **caractérisé en ce que** les poulies de renvoi (22 à 25) sont réglables transversalement par rapport au sens longitudinal du longeron (15).

4. Dispositif selon la revendication 2 ou 3, **caractérisé en ce qu'**au moins un moteur d'entraînement (26, 27) pour les courroies (5, 6) est disposé sur le longeron (15).
